Europäisches Patentamt

**European Patent Office**

Office européen des brevets

(11) Numéro de publication: **0 190 430**
**B1**

(12) **FASCICULE DE BREVET EUROPEEN**

(45) Date de publication du fascicule du brevet: **14.03.90**

(51) Int. Cl.⁵: **H 05 B 6/80**

(21) Numéro de dépôt: **85115379.1**

(22) Date de dépôt: **04.12.85**

(54) **Procédé et dispositif pour le réchauffement d'aliments.**

(30) Priorité: **25.01.85 CH 329/85**

(43) Date de publication de la demande:
**13.08.86 Bulletin 86/33**

(45) Mention de la délivrance du brevet:
**14.03.90 Bulletin 90/11**

(84) Etats contractants désignés:
**AT BE DE FR IT LU NL SE**

(56) Documents cités:
**EP-A-0 132 080**
**FR-A-2 507 060**
**US-A-1 870 476**
**US-A-3 427 422**
**US-A-3 676 058**
**US-A-4 286 133**

(73) Titulaire: **SOCIETE DES PRODUITS NESTLE S.A.**
**Case postale 353**
**CH-1800 Vevey (CH)**

(72) Inventeur: **Le Viet, Toai**
**Sentier de Clies**
**CH-1800 Vevey (CH)**

Courier Press, Leamington Spa, England.

## Description

L'invention concerne un procédé et un dispositif pour le réchauffement d'aliments dans un champ d'énergie micro-ondes.

Les fours à micro-ondes sont connus et sont de plus en plus utilisés notamment dans la restauration dite rapide pour réchauffer des aliments précuits ou surgelés. Le problème pour ces fours micro-ondes est le défaut d'uniformité de répartition de l'énergie, c'est-à-dire que lors du réchauffement, il arrive fréquemment que des zones internes de l'aliment ne soient pas décongelées et chaudes, ce qui crée pour le consommateur une impression désagréable lors de l'ingestion dudit aliment. La demande de brevet suédoise No. 78 10 570 concerne également un four micro-ondes pour traiter les aliments surgelés et ledit four comporte dans une enceinte de réchauffement une source micro-ondes et un disque tournant légèrement incliné. Ce disque est prévu pour recevoir l'aliment, notamment la saucisse à réchauffer et il présente sur sa périphérie un bord de retenue pour éviter que la saucisse ne quitte ledit disque. L'inconvénient de ce dispositif est d'une part qu'il ne permet que le réchauffement d'un seul aliment, ce qui nécessite une source micro-ondes à énergie fixe et ne rend pas le système vraiment utilisable en restauration rapide et d'autre part que compte tenu de l'inclinaison du disque par rapport au plan horizontal, les risques de mauvais placement de l'aliment sur le disque se trouvent accrus conduisant comme pour les fours micro-ondes classiques à une mauvaise uniformité de répartition de la chaleur.

Le brevet US 3 676 058 concerne un dispositif pour stériliser ou pasteuriser des articles tels que du lait, des fruits ou des légumes par énergie micro-ondes. Le dispositif comporte un plateau principal tournant suivant un axe vertical et un système mécanique d'engrenages définissant des petites tables tournantes, de manière à réaliser un mouvement planétaire. L'inconvénient de ce système est que, d'une part il nécessite un montage mécanique complexe et onéreux et d'autre part, il induit pour l'article à traiter un mouvement seulement bi-dimensionnel.

La présente invention concerne un procédé et un dispositif qui pallient aux inconvénients de la technique antérieure, en réduisant les coûts d'énergie, en accélérant le rythme de réchauffement des aliments, en garantissant une bonne distribution de la chaleur sur l'aliment traité et en permettant de régler la puissance de la source micro-ondes.

L'invention concerne un procédé pour le réchauffement d'aliments dans un champ d'énergie micro-ondes dans lequel on réchauffe les aliments en les faisant tourner dans le champ micro-ondes selon un premier mouvement mécanique autour d'un axe incliné par rapport à la verticale et selon un second mouvement non mécanique autour de leur axe propre, sensiblement parallèle à l'axe incliné.

Compte tenu du fait que l'énergie micro-ondes a dans l'espace des minima et des maxima, il est souhaitable d'exposer chaque partie des aliments aux maxima d'énergie dans l'espace. Pour ce faire, il faut donc déplacer les aliments à réchauffer dans les trois dimensions. Selon le procédé de l'invention, on réchauffe les aliments en leur faisant subir deux mouvements: un mouvement mécanique autour d'un axe incliné par rapport à la verticale et un second mouvement autour de leur propre axe, ce second mouvement étant induit en raison de l'inclinaison, du poids de l'aliment et de la rotation mécanique. On obtient ainsi des aliments qui ont bien été exposés aux maxima de l'énergie micro-ondes.

Le mouvement des aliments ainsi créé est un mouvement planétaire.

Dans ce mouvement planétaire les aliments tournent autour d'un axe faisant un angle avec la verticale compris entre 40 et 65°. La rotation mécanique des aliments se fait à une vitesse comprise entre 10 et 20 tours/min.

L'invention concerne en outre un dispositif pour le réchauffement d'aliment comportant une enceinte de réchauffement avec une source micro-ondes et un plateau incliné, de préférence circulaire, monté à rotation sensiblement en son centre sur un axe d'entraînement, dans lequel ledit plateau tournant comporte, disposées uniformément sur sa périphérie, au moins deux logements pour aliments, perpendiculairement au plan du plateau circulaire.

Les logements pour aliments ont des formes telles qu'elles épousent sensiblement les formes des aliments à réchauffer. Il est en effet préférable que la longueur et le diamètre desdits logements soient tels que les aliments dépassent et bougent librement dans lesdits logements. Car, il est essentiel selon la présente invention, comme mentionné ci-dessus, que les aliments à réchauffer, d'une part soient entraînés dans le mouvement de rotation du plateau incliné et d'autre part que ces aliments du fait de leur position inclinée et entraînée par leur propre poids, subissent un mouvement circulaire autour de leur propre axe. Chaque aliment à réchauffer effectue ainsi un mouvement planétaire dans l'enceinte du four. Ce déplacement planétaire dans l'espace permet à chaque aliment à réchauffer de recevoir l'ensemble de l'énergie micro-ondes distribuée inégalement dans le four d'où une meilleure répartition de la température dans les aliments à réchauffer.

Les logements sont formés par plusieurs tiges n'absorbant pas l'énergie micro-ondes, par exemple en verre, téflon, polycarbonate ou matière plastique comme dans la technique. La présence d'ouvertures sur les logements permet une bonne ventilation du produit, conduisant de ce fait à un aliment doté d'un caractère croustillant.

Ces logements à tiges sont montés directement sur le plateau incliné tournant. Selon une forme de réalisation avantageuse, il est également possible de prevoir ces logements pour aliments sur un second plateau, monté sur le plateau tournant. L'intérêt de cette variante est qu'elle permet de changer de plateau circulaire, ce qui facilite le lavage des plateaux et évite les mélanges de goûts entre différents aliments à réchauffer, On peut, de ce fait, prévoir des plateaux avec un nombre différent de logements, selon le type et le nombre d'aliments à réchauffer.

Que les logements soient amovibles ou non sur le plateau tournant, leur nombre est fonction de l'espace disponible dans le four micro-ondes et de la puissance de la source micro-ondes. Ce nombre n'est cependant pas critique. Il est de préférence compris entre 2 et 6. Si on prévoit deux logements pour aliments, ils sont diamétralement opposés sur le plateau. Il est prévu de préférence trois ou quatre logements pour aliments. Comme déjà mentionné ci-dessus, on peut disposer d'une source micro-ondes à énergie réglable que l'on adapte suivant la quantité des aliments à réchauffer.

La source micro-ondes est un magnétron tel qu'utilisé dans les fours classiques. Ce magnétron est séparé de la chambre de réchauffement par une cloison. L'enceinte de réchauffement est parfaitement étanche aux micro-ondes, c'est-à-dire elle ne laisse pas sortir l'énergie micro-ondes dans l'espace environnant. Le chargement et le déchargement des aliments à réchauffer se fait manuellement.

Le type d'aliments qu'on peut finir de cuire et/ou réchauffer dans le dispositif selon l'invention n'est pas critique. Il peut s'agir de n'importe quel type d'aliments précuits, froids ou congelés, par exemple des saucisses, des produits à base de pâte boulangère précuite renfermant une saucisse, type "hot dog", ou une farce congelée salée ou sucrée. Dans ce dernier cas, le dispositif selon l'invention finit de cuire le pain et décongèle et réchauffe la farce. Dans ce cas également, la position inclinée des aliments à réchauffer présente un avantage supplémentaire, car elle empêche le débordement de la farce au cours du réchauffement.

Le plateau circulaire est incliné de 40 à 65° par rapport au plan horizontal, ce qui permet un balayage maximum de l'espace et facilite l'apparition du mouvement planétaire.

De manière avantageuse, le dispositif comporte en outre un système d'évacuation de vapeur, surtout nécessaire lors de décongélations et réchauffements d'aliments.

La suite de la description est faite en référence aux dessins sur lesquels

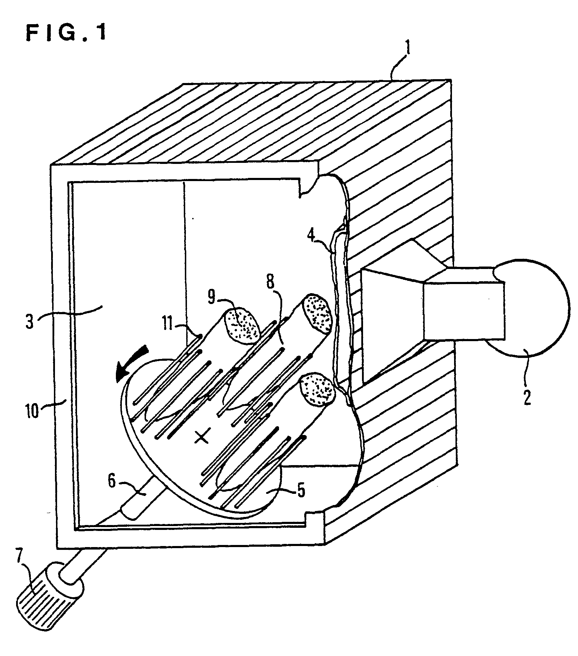

Fig. 1 est une vue en perspective du dispositif selon l'invention et

Fig. 2 une forme de réalisation du second plateau prévu pour être monté sur le plateau tournant.

La référence (1) désigne l'enceinte de réchauffement comportant le magnétron (2) alimenté sur secteur et la chambre de réchauffement (3) elle-même. La cloison (4) permet de protéger le magnétron contre les poussières et autres éléments extérieurs. Dans la chambre (3) se trouve un plateau incliné (5) monté en son centre sur un axe de rotation (6) entraîné par un moteur (7). On a représenté sur la figure une configuration du plateau incliné avec trois logements (8) pour aliments (9). Ces logements (8) sont fixes, perpendiculaires au plateau (5) et sont formés par des tiges (11).

Lorsqu'on souhaite utiliser le dispositif selon l'invention, on charge les aliments (9) par la porte (10) et on démarre le magnétron ainsi que la rotation du plateau (5).

Le plateau tourne dans le sens indiqué par la flèche et les aliments (9), par exemple une baguette ou une partie de baguette fourrée avec une farce congelée, tournent avec le plateau et à l'intérieur du logement (8) le long de leur axe propre, sensiblement parallèle à l'axe (6).

Au bout d'un temps très court, de l'ordre de quelques minutes, la baguette fourrée est prête à être dégustée. On arrête le magnétron, on décharge les baguettes prêtes à l'emploi et on opère une nouvelle fournée.

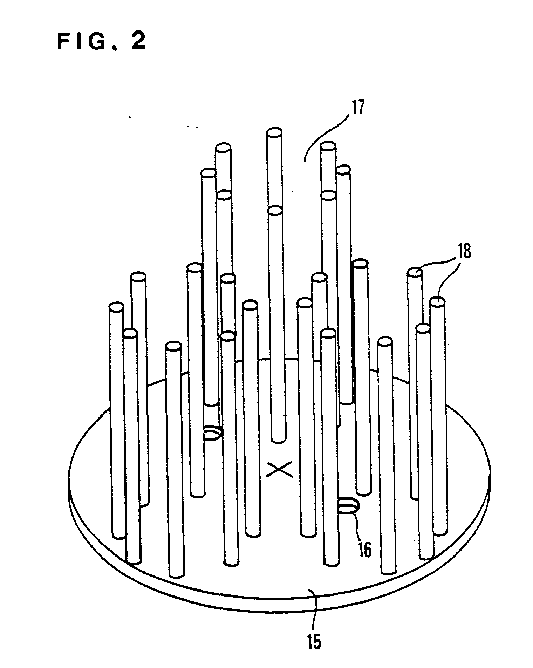

La Fig. 2 représente une forme de réalisation avec un second plateau amovible (15), prévu pour être monté sur un plateau incliné tournant (non représenté). Ce plateau tournant présente des pitons s'engageant dans les alésages correspondants (16) du disque (15). Le plateau (15) comporte trois logements (17) pour aliments qui sont constitués par une pluralité de tiges (18) n'absorbant pas l'énergie micro-ondes. Les ouvertures entre les tiges constituant un logement permettant un bon déplacement de l'air conduisant à un aliment réchauffé croustillant.

Le procédé et le dispositif selon l'invention permettent d'opérer rapidement avec un gain appréciable d'énergie compte tenu du nombre de baguettes réchauffées simultanément pour obtenir un aliment uniformément réchauffé grâce à son mouvement planétaire, dans l'enceinte de réchauffement.

On opère par exemple avec une source micro-ondes d'énergie comprise entre 1 et 2 KW et de fréquence de 2450 MHz. On arrive à réchauffer des aliments en 2 à 3 minutes.

**Revendications**

1. Procédé pour le réchauffement d'au moins deux aliments dans un champ d'énergie micro-ondes, dans lequel on réchauffe les aliments en les faisant tourner dans le champ micro-ondes selon un premier et un second mouvement, caractérisé en ce que le déplacement des aliments selon le premier mouvement est mécanique autour d'un axe faisant un angle avec la verticale compris entre 40 et 65° et le déplacement des aliments selon le second mouvement est non mécanique autour de leur axe propre, sensiblement parallèle à l'axe incliné.

2. Procédé selon la revendication 1, caractérisé en ce qu'on fait tourner les aliments à une vitesse comprise entre 10 et 20 tours/min.

3. Dispositif pour le réchauffement d'aliments comportant une enceinte de réchauffement (1) avec une source micro-ondes (2) et un plateau circulaire (5) monté à rotation sensiblement en son centre sur un axe d'entraînement (6), caractérisé en ce que ledit plateau est incliné de 40 à 65° par rapport au plan horizontal et comporte, disposés uniformément sur sa périphérie au moins deux logements (8) pour aliments (9), perpendiculairement au plan du plateau, la longueur et le diamètre des logements (8) étant tels que lesdits aliments dépassent et bougent librement dans lesdits logements.

4. Dispositif selon la revendication 3, caractérisé en ce que les logements sont formés par plusieurs tiges n'absorbant pas l'énergie micro-ondes.

5. Dispositif selon la revendication 3, caractérisé en ce que les logements sont ménagés sur un second plateau, monté sur le plateau tournant.

6 Dispositif selon l'une des revendications 3 à 5, caractérisé en ce qu'il comporte entre 2 et 6 logements pour aliments.

7. Dispositif selon l'une des revendications 3 ou 5, caractérisé en ce qu'il comporte un système d'évacuation de vapeur.

8. Dispositif selon l'une des revendications 3 ou 5, caractérisé en ce que la source micro-ondes est à énergie réglable.

## Patentansprüche

1. Verfahren zum Erhitzen von zumindest zwei Lebensmitteln in einem Mikrowellen-Energiefeld, bei welchem die Lebensmittel erhitzt werden, indem sie im Mikrowellenfeld in eine erste und eine zweite Drehbewegung versetzt werden, dadurch gekennzeichnet, daß die Verlagerung der Lebensmittel gemäß der ersten Bewegung mechanisch um eine Achse erfolgt, die einen Winkel zwischen 40 und 65° mit der Vertikalen einschließt, und die Verlagerung der Lebensmittel gemäß der zweiten Bewegung nicht mechanisch um ihre eigene Achse erfolgt, im wesentlichen parallel zur geneigten Achse.

2. Verfahren nach Anspruch 1, dadurch gekennzeichnet, daß die Lebensmittel mit einer Geschwindigkeit zwischen 10 und 20 U/min gedreht werden.

3. Vorrichtung zum Erhitzen von Lebensmitteln mit einem Heizbehälter (1) mit einer Mikrowellenquelle (2) und einer Kreisplatte (5), die im wesentlichen in ihrer Mitte auf einer Antriebsachse (6) drehbar gelagert ist, dadurch gekennzeichnet, daß die Platte zur Horizontalebene zwischen 40 und 65° geneigt ist und auf ihrem Umfang gleichmäßig verteilt zumindest zwei senkrecht zur Plattenebene stehende Aufnahmen (8) für die Lebensmittel (9) aufweist, wobei die Länge und der Durchmesser der Aufnahmen (8) derart ist, daß die Lebensmittel in die Aufnahmen frei eintreten und sich in diesen bewegen können.

4. Vorrichtung nach Anspruch 3, dadurch gekennzeichnet, daß die Aufnahmen durch mehrere Stäbe gebildet sind, die Mikrowellenenergie nicht absorbieren.

5. Vorrichtung nach Anspruch 3, dadurch gekennzeichnet, daß die Aufnahmen auf einer zweiten Platte ausgebildet sind, die auf der drehbaren Platte montiert ist.

6. Vorrichtung nach einem der Ansprüche 3 bis 5, dadurch gekennzeichnet, daß sie zwischen 2 und 6 Aufnahmen für Lebensmittel aufweist.

7. Vorrichtung nach einem der Ansprüche 3 bis 5, dadurch gekennzeichnet, daß sie ein System zum Ableiten von Dampf aufweist.

8. Vorrichtung nach einem der Ansprüche 3 bis 5, dadurch gekennzeichnet, daß die Energie der Mikrowellenquelle regelbar ist.

## Claims

1. A process for reheating at least two foods in a microwave energy field, wherein the foods are reheated by being made to rotate in the microwave field according to a first and a second movement, characterized in that the moving of the foods according to the first movement is mechanical about an axis which is at an angle to the vertical of from 40 to 65° and the moving of the foods according to the second movement is non-mechanical about their own axis, substantially parallel to the inclined axis.

2. A process according to claim 1, characterized in that the foods are being made to rotate at 10 to 20 revolutions per minute.

3. An apparatus for reheating foods comprising a reheating enclosure (1) with a microwave source (2) and an inclined, preferably circular plate (5) rotatably mounted substantially at its center on a drive shaft (6), characterized in that said plate is inclined at 40 to 65° relative to the horizontal plane and comprises, uniformly arranged around its periphery, at least two holders (8) for foods (9), perpendicular to the plane of the plate, the length and the diameter of the holders (8) being such that said foods project beyond and move freely in said holders.

4. An apparatus as claimed in Claim 3, characterized in that the holders are formed by a plurality of rods which do not absorb microwave energy.

5. An apparatus as claimed in Claim 3, characterized in that the holders are provided on a second plate mounted on the rotating plate.

6. An apparatus as claimed in any of Claims 3 to 5, characterized in that it comprises between 2 and 6 holders for foods.

7. An apparatus as claimed in any of Claims 3 to 5, characterized in that it comprises a steam extraction system.

8. An apparatus as claimed in any of Claims 3 to 5, characterized in that the microwave source is of variable energy.

FIG.1

FIG. 2